# EUROPEAN PATENT SPECIFICATION

(11) **EP 1 421 746 B1**
(45) Date of publication and mention of the grant of the patent: **11.04.2007**
(21) Application number: 01965195.9
(22) Date of filing: 16.08.2001
(51) Int. Cl.: H04L 12/56, H04L 29/06, H04Q 7/22

(54) **DEVICE, METHOD AND SYSTEM FOR ENHANCED ROUTING IN MOBILE IP NETWORKING**
EINRICHTUNG, VERFAHREN UND SYSTEM FÜR VERBESSERTES ROUTING BEI DER MOBIL-IP-VERNETZUNG
DISPOSITIF, PROCEDE ET SYSTEME POUR L'ACHEMINEMENT AMELIORE DANS LE RESEAUTAGE IP MOBILE

(43) Date of publication of application: 26.05.2004
(73) Proprietor: Nokia Corporation, 02150 Espoo (FI)
(72) Inventor: RAJAHALME, Jarno, FIN-02400 Kirkkonummi (FI)
(74) Representative: Eisenführ, Speiser & Partner
(86) International application number: PCT/EP2001/009461
(87) International publication number: WO 2003/017586

(56) References cited:
- EP-A- 1 111 874
- EP-A- 1 161 032
- US-A1- 2001 012 777
- HAN Y-H ET AL: "ROUTE OPTIMIZATION BY THE USE OF TWO CARE-OF ADDRESSES IN HIERARCHICAL MOBILE IPV6" IEICE TRANSACTIONS ON COMMUNICATIONS, INSTITUTE OF ELECTRONICS INFORMATION AND COMM. ENG. TOKYO, JP, vol. E84-B, no. 4, April 2001 (2001-04), pages 892-902, XP001058878 ISSN: 0916-8516

## Description

### FIELD OF THE INVENTION

The present invention relates to a device, system and method for improved mobile Internet protocol support in Mobile Internet Protocol communications, and in particular concerns a device, system and method for enhanced Mobile Internet Protocol routing in communication networks.

### BACKGROUND OF THE INVENTION

With ongoing development of mobile and wireless communications systems and networks in recent years along with the availability of ever growing varieties of portable or mobile devices providing enhanced connectivity, in particular information and messaging resources and services offered by the Internet increasingly attract attention.

Although the Internet has long been stationary and become, in a sense, portable only before long, today's efforts are to a considerable extent concentrated on mobile computing and networking in which activities are not disrupted when a user changes his equipment's point of attachment to the Internet, but all required reconnection is done automatically and noninteractively.

To this effect, the Mobile Internet Protocol (Mobile IP) has been proposed as a standard protocol that builds on the Internet Protocol (IP), from version 4 (IPv4) on and further enhanced in version 6 (IPv6), in-order to make mobility transparent to applications and existing higher level protocols.

Thereby, effective deployment of Mobile IP (IPv6, or IPv4 with route optimization) essentially depends on the support for Mobile IP by so called correspondent nodes, such as IP network servers like e.g. web servers, email servers, streaming media servers, instant messaging servers, telephony servers, proxy servers and the like, or IP peer terminals. Routing to correspondent nodes is done based on the destination address in the IP packets. However, direct routing from the correspondent nodes back to the mobile node depends on a binding cache being maintained by the correspondent node. Entries in the binding cache maintain a mapping between the longer term home address of the mobile node, and the shorter term care-of address of the mobile node. Without the binding cache packets to the mobile node will be routed via the home address, which may introduce significant additional routing processing and thus delay to the packet delivery. With binding cache the correspondent node will be able to route the packet directly to the mobile node's current care-of address, thus avoiding unnecessary routing processing and associated delay.

Mobility, however, gives rise to significant security problems in terms of ensuring IP packet delivery only to the intended receiver. This is extremely important, since otherwise e.g. a rogue host could claim a mobile node's IP connectivity, so that the correspondent node would not any more communicate with the real mobile node, or host, having the home address in question, but all traffic for that address would be directed to the rogue host instead.

Therefore, it is the responsibility of the correspondent node to authenticate a mobile node sending a binding update and to authorize the mobile node to be allowed to claim ownership of the claimed home address. This is carried out by a so-called binding cache management.

It is, however, undesirable to add the additional computational overhead of such binding cache management, and security functionalities, configuration and management related thereto, to the responsibility of some correspondent hosts for the following reasons.

A first reason is that in e.g. a server pool, in which individual server load typically reaches maximum values during high traffic in certain periods of day, any additional computational and/or storage load would result in the need to incorporate additional servers into the pool.

A second reason resides in the possibility that a mobile IP user terminal may be in contact with an arbitrary number of individual servers from the same pool. In this case each server would separately process the transmitted binding updates, i.e. the messages supplying a new binding to an entity that needs to know a new care-of address for a mobile node, which accordingly would add to the overall load of the server pool or farm. In addition, if a load balancing method is used in which IP packets to a single IP address are distributed to a number of separate hosts for processing, it is conceivable that only one individual server receives the binding update from the mobile host, causing the mobile node to send a virtually unlimited number of additional binding updates even if a positive binding acknowledgment was returned by an individual server host.

As a third reason, Internet service providers of the correspondent node do in general have no economical motive to add support for mobile IP into each correspondent node. If Mobile IP is not supported by correspondent nodes, all traffic for the mobile node would be sent via the mobile node's home agent and therefore add to the traffic load of both home agent and home network, because packets routed via the home agent usually take a longer route than packets routed directly from the correspondent host to the current network point of attachment of the mobile node.

Accordingly, there are two main drawbacks to mobile IP support in correspondent nodes that present significant problems for Internet service providers: the first is that mobile IP binding updates upon processing translate into IP layer binding cache entries that take both space and processing time from each correspondent node; and the second is that in order to process the binding update, each correspondent node must perform security processing, such as Internet Protocol security (IPsec) processing including key management, session key generation and the like or any other suitable security processing, resulting in significant computational overhead and additional states requiring to be maintained for each connected host beyond the lifetime of e.g. individual Transfer Control Protocol (TCP) connections.

The afore-mentioned drawbacks in particular may develop Into practically unmanageable burdens in a case In which, for example, an individual server serves a large number of short service requests from a large number of individual client mobile hosts.

The US 2001/0012777 A1 discloses a communication system of a network that supports a mobile terminal. There, devices arranged within a network make a communication for managing or setting communication parameters required when a mobile terminal moving between sub-networks communicates with a correspondent terminal which then communicates with a mobile terminal via these devices. Thereby, the correspondent terminal does not need to comprise a particular capability to receive a communication service with a mobile terminal, so that a heavy processing load is never imposed on the correspondent terminal.

A further state of art, the specification RFC 2002, specifying an Internet standards track protocol for the internet community specifies protocol enhancements that allow transparent routing of Internet Protocol (IP) datagrams to mobile nodes in the internet. In RFC 2002 new architectural entities are introduced. According to this state of art a mobile node uses its home address as the source address of all IP datagrams that it sends, except the datagrams sent for certain mobility management functions. As regards the exception, a care-of address is used instead or the IP soutce address in RFC 2002, when a mobile node is registered on a foreign network.

### SUMMARY OF THE INVENTION

In view of the above, the object of the invention thus resides in providing a device, method and system that add support for mobile IP to an existing network in such a way that correspondent hosts forming part of the existing networks need not be changed in any way, and that management of security associations and policies is simplified for the correspondent host side as a whole.

According to the invention, this object is achieved by a device as defined in claim 1, a method as defined in claim 16, and a system as defined in claim 25, respectively.

Advantageous further developments of the invention are subject of the accompanying dependent claims.

In particular, a device for Internet protocol routing is provided, which is characterized by maintaining means arranged to maintain mobility related binding cache outside an Individual correspondent node; and managing means arranged to manage said binding cache on behalf of the correspondent node.

Accordingly, the proposed network device and corresponding method provides the capability of maintaining and managing the binding cache required immobile IP packet delivery outside an individual correspondent host and also of taking care of the associated security functions, thus offloading all mobile IP correspondent node related functionality from an individual correspondent host.

According to an advantageous further development, the device may further comprise examining means arranged to examine each packet being routed through the device for IP address binding related messages; processing means arranged to process said address binding related messages detected in a packet, including any necessary signaling for the completion of the address binding process; and binding cache entry forming means arranged to form a binding cache entry in a binding cache based on said address binding process.

Such a device preferably further comprises maintaining means arranged to take care of the associated security functions.

Preferably, modification means may be arranged to remove said IP address binding related message of the packet after the processing by said processing means.

In cases in which plural correspondent nodes are present in the routing direction, the processing means may be arranged to terminate the processing of the IP address related binding messages after the first address binding process specifying the same home address to care-of address mapping has been processed.

According to an advantageous further development, the examining means can be arranged to examine each packet being routed through the device for source address and optionally a Mobile IP home address option matching to an existing binding cache entry; replacing means may be provided to replace a care-of address in a source address field of said matching packet with a the home address as specified in said matching binding cache entry; and routing means may be provided to route the packet to a correspondent node specified by the destination address in the packet.

Furthermore, removing means may be provided to remove said Mobile IP home address option from the packet after the processing by the processing means.

According to another advantageous further development, the examining means may arranged to examine the destination address of each IP packet being routed through the device for matching with a home address in an existing binding cache entry. In this case, intercepting means may be provided to intercept said matching IP packet and to tunnel the packet to the receiver's care-of address as found from said matching binding cache entry. Furthermore, adding means may be provided to add a routing header to said matching IP packet to route the packet to the receiver's care-of address as found from the matching binding cache entry.

The routing device may be located in one or a plurality of routers through which the traffic to and from the correspondent node is routed. For an individual correspondent node, the routing device may be located in an access router serving the individual correspondent node.

As another option, the routing device may be arranged as an appliance adapted to be plugged into a network of correspondent nodes and to take care of all mobile IP correspondent node related functionalities for all correspondent hosts in said network. In particular, the routing device may be provided as an extension to security appliances and/or load balancing appliances.

For an individual correspondent node, the routing device may be located in a higher level router serving the correspondent node.

Using a device constructed as set forth above, the invention thus proposes a network entity, method and system enabling the correspondent node to serve a mobile host without requiring any additional functionality for or configuration of the correspondent node itself, and to simultaneously make use of direct routing provided by the binding update sent by a mobile node (i.e. not routing packets to the mobile node via its home agent).

Hence, according to the present invention, the management of security policies is considerably simplified in comparison to the management thereof within individual correspondent hosts, and additional processing capacity for authenticating and authorizing the binding update requests can be imparted to the proposed network entity instead of being imparted to each correspondent node separately.

### BRIEF DESCRIPTION OF THE DRAWINGS

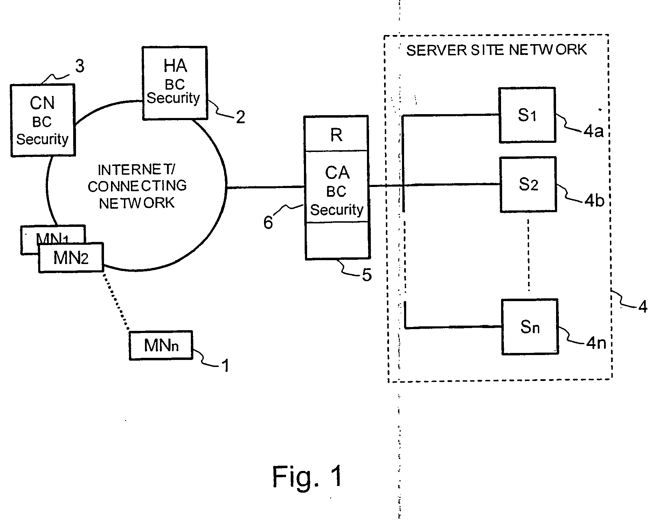

The present invention is now further detailed with reference to a preferred embodiment as the presently considered best mode of carrying out the invention, in conjunction with the accompanying drawing, in which
- Fig. 1: schematically shows a structural diagram of a network for providing mobile access including a device according to a preferred embodiment.

### DESCRIPTION OF THE PREFERRED EMBODIMENT

The network depicted in Fig. 1 is fundamentally based on known protocols and mechanisms developed for the Internet network layer to support mobility according to the Mobile IP specifications which add mobility support to the Internet network layer protocol IP by offering routing in a dynamic network with changes in connectivity.

To this effect, the mobile IP basically allows a mobile node (MN) 1 out of a plurality of mobile nodes MN₁ to MNₙ sending binding updates to use two IP addresses, a home address making the mobile node logically appear attached to its home network, and a so called care-of address that changes at each new point of attachment and identifies the mobile node's respective point of attachment with respect to the network topology. In the above configuration, Mobile IP requires the presence of a network node acting as a home agent (HA) 2, which tunnels packets sent to the mobile node's home address to the mobile node at its current care-of address.

In IP packet transfer, addressing is carried out using bindings containing the mobile node's home address, i.e. its address in the associated home network, the mobile node's care-of address, and a registration lifetime. Whenever a mobile node 1 moves in a foreign network, a binding update is required which is a message that supplies a new binding to a network entity that needs to know the then new care-of address for the mobile node 1.

In general, any IP node may have the property of being a mobile node or a correspondent node. Furthermore, it is noted that Fig. 1 does not show any additional routers which might be arranged for providing connections to the Internet/connecting network.

Based on the above, the present embodiment is in the following detailed by means of an example of a server farm depicted on the right hand side of Fig. 1, in which a server site network or farm 4 is linked to the Internet via an access router (R) 5 providing all Mobile IP related correspondent node, or host, processing for a number of servers (S₁, S₂, ... Sₙ) 4a to 4n.

According to the embodiment, the servers 4a to 4n do not include any binding caches. Instead, a binding cache is maintained outside the individual correspondent nodes (e.g. S1 to Sn 4a to 4n) of the server site network 4 in a network entity or element, respectively, as proposed herein, which then provides required binding cache processing and security functions for all servers 4a to 4n in the server site network 4 and, thus, offloads all mobile IP correspondent node related functionality from the individual correspondent nodes.

The network element providing this functionality is herein called a Correspondent Agent (CA) 6 and is preferably incorporated into one or a plurality of routers, through which the traffic to and from the associated correspondent node or nodes is routed.

In general, for an individual correspondent node such as a peer mobile terminal, the Correspondent Agent 6 may be incorporated into e.g. the access router 5 or any higher level router that serves this correspondent node. As regards server site networks such as the server site network 4 shown in Fig. 1, the router(s) 5 serving the site subnet(s) is (are) in this case preferably adapted to manage the binding cache on behalf of all the servers 4a to 4n, as schematically illustrated.

More specifically, the Correspondent Agent 6 comprises fetching means that fetch IP packets coming in from the Internet/Connecting Network by detecting arriving IP packets being routed through the device, examining means that examine each arrived packet for Mobile IP binding updates contained therein, Processing means that process a binding update detected in a packet, binding cache entry forming means that form a binding cache entry in an associated binding cache outside the correspondent node based on said detected binding update, replacing means that replace the care-of address of the mobile node contained in a source address field of the binding update with a Mobile IP home address as specified in the formed binding cache entry, and routing means that route the packet then to a correspondent node.

In line with the above, a particular implementation of the Correspondent Agent 6 consists in providing a Mobile IP correspondent appliance that can be plugged into the network of the correspondent node(s) and will then take care of all mobile IP correspondent node related functionality for all the correspondent nodes in a site.

Alternatively, the Correspondent Agent 6 functionality can also be a arranged as an extension device to as such known security appliances and load balancing appliances, and in general be provided further upstream in a higher level of the access network depending on particular network dimensioning reasons.

Hereinafter, the operation of the above-mentioned correspondent agent 6 above will be schematically described.

In case of IP packets coming in from the IP network, the Correspondent Agent 6 fetches a packet by detecting and examining each incoming packet being routed through it for mobile IP binding updates and forms the binding cache entries based on the binding updates received from the mobile node 1. In other words, the binding update is addressed to the correspondent node, but processed by the Correspondent Agent 6.

In addition, the Correspondent Agent 6 may be configured to send a binding acknowledgment or any other required mobile IP signaling, as necessary.

After having processed a detected mobile IP binding update, if there are other non-mobile IP related options or payload in the packet, the packet is routed normally to the addressed correspondent node, e.g. one of the servers 4a to 4n or a "stand-alone" correspondent node 3 of the Internet/connecting network. To this effect, the contents of the incoming packet are modified in order to replace the care-of address in the source address field with the home address of the mobile node 1 as specified by either the binding cache entry or a possible mobile IP home address option.

A care-of address in the source address field of packets matching a binding cache entry can be changed to the mobile node's home address, as found from the binding cache entry. This applies to both packets containing a binding update option and all other packets.

For all incoming IP packets with a mobile IP home address, the Correspondent Agent 6 can be configured to either replace the original source address with the home address in the home address option or optionally remove the home address option from the packet, if the packet is not protected against modification. It is noted in the latter-respect that leaving the home address option in place causes no harm to the concerned correspondent node even if it processes the home address option, since both the home address option and the source address field contain the same IP address.

Additionally, if the correspondent nodes implement the home address option processing as mandated by the Mobile IP specification, there is no functional harm in leaving the home address option and the accompanying IP source address intact, since the correspondent node would use the home address in the home address option as the logical source address even if the correspondent node does not maintain a binding cache.

For IP packets sent back by the correspondent node to the mobile node 1, the Correspondent Agent 6 again intercepts the sent packets and either tunnels them to the mobile node 1, just as a home agent would do, or adds, if the packet is not protected against modification, a routing header, just as the correspondent node itself would have done if it had the binding cache located in itself (corresponding to normal Mobile IP correspondent node functionality).

In cases in which the mobile node 1 corresponds with more than one correspondent node behind the Correspondent Agent 6, the Correspondent Agent 6 may be arranged to omit or limit the processing of the binding updates after the first one received, since an active binding for the same home address to correspondent node address mapping is already present.

Moreover, the mobile node 1, recognizing that the IP packets from additional correspondent nodes will not arrive through the home agent but are directly routed, can be configured to not send any additional binding updates (even if the mobile node did not actually exchange a binding update with the individual corresponding address sending the packet).

As described above, the proposed Mobile IP Correspondent Agent 6 is a network entity maintaining a binding cache and managing Mobile IP related binding updates and security functionality on behalf of and instead of, respectively, correspondent nodes themselves. It allows e.g. existing server farms to remain untouched, while still adding support for direct routing from the correspondent nodes to the mobile IP clients. Optionally the proposed Correspondent Agent 6 allows a mobile host to manage only one binding with the entire server site, even if communicating with more than one correspondent node on the site in question. The proposed Correspondent Agent 6 further enables building Mobile IP Correspondent Agent appliance products for plug in and/or plug-and-play support of mobile clients by a server site. In addition, the Correspondent Agent functionality can also be integrated into other network elements such as access routers.

It is noted that the present invention is not restricted to any specific signaling sequence for binding cache management but can be used in connection with any possible binding cache signaling. Thus, the preferred embodiment may be modified within the scope of the attached claims.

## Claims

1. A device for Internet protocol routing, wherein
a) maintaining means is arranged to maintain a mobility related binding cache outside an individual correspondent node (S1, ..., Sn, CN); and
b) managing means is arranged to manage said binding cache on behalf of the correspondent node (S1, ..., Sn, CN),
said device **characterized by**
c) replacing means arranged to replace a care-of address in the source address field of a packet sent by a mobile node (MN) and routed through the device with a home address as stored by said maintaining means.

2. A device according to claim 1, **characterized by**
examining means arranged to examine each packet, being routed through the device, for IP address binding related messages;
processing means arranged to process said IP address binding related messages detected in a packet, including any necessary signaling for the completion of the address binding process; and
binding cache entry forming means arranged to form a binding cache entry in a binding cache based on said address binding process.

3. A device according to claim 2, **characterized in that**
said managing means is arranged to take care of the associated security functions.

4. A device according to claim 2, **characterized by**
modification means arranged to remove said IP address binding related message of the packet after the processing by said processing means.

5. A device according to claim 2, **characterized in that**,
in cases in which plural correspondent nodes (S1, ..., Sn) are present in the routing direction, said processing means is arranged to terminate the processing of the IP address related binding messages after the first address binding process specifying the same home address to care-of address mapping has been processed.

6. A device according to claim 2, **characterized in that**
said examining means is provided to examine each packet being routed through said device for source address and optionally a Mobile IP home address option matching to an existing binding cache entry; and
routing means are provided to route the packet to a correspondent node (S1, ..., Sn, CN) specified by the destination address in the packet;
wherein said replacing means are provided to replace said care-of address in said source address field of a matching packet with a home address as specified in said matching binding cache entry

7. A device according to claim 6, **characterized by**
removing means arranged to remove said Mobile IP home address option from the packet

8. A device according to claim 2, **characterized in that**
said examining means are provided to examine the destination address of each IP packet being routed through said device for matching with a home address in an existing binding cache entry.

9. A device according to claim 8, **characterized by**
intercepting means arranged to intercept said matching IP packet and to tunnel the packet to the receiver's care-of address as found from said matching binding cache entry.

10. A device according to claim 8, **characterized by**
adding means arranged to add a routing header to said matching IP packet to route the packet to the receiver's care-of address as found from the matching binding cache entry.

11. A device according to any one of the preceding claims, **characterized in that**
said device is located in one or a plurality of routers through which the traffic to and from the correspondent node (S1, ..., Sn, CN) is routed.

12. A device according to claim 11, **characterized in that**,
for an individual correspondent node (S1, ..., Sn, CN), said device is located in an access router serving the individual correspondent node (S1,..., Sn, CN).

13. A device according to any one of the preceding claims, **characterized in that**
said device is arranged as an appliance adapted to be plugged into a network of correspondent nodes and to take care of all mobile IP correspondent node related functionalities for all correspondent hosts in said network.

14. A device according to claim 13, **characterized in that**
said device is provided as an extension to security appliances and/or load balancing appliances.

15. A device according to any one of the preceding claims, **characterized in that**,
for an individual correspondent node (S1, ..., Sn, CN), said device is located in a higher level router serving the correspondent node (S1, ..., Sn, CN).

16. A method for Internet Protocol routing using a Internet protocol routing device,
wherein said method comprises the steps of
a) maintaining a mobility related binding cache outside an individual correspondent node (S1, ..., Sn, CN); and
b) managing said binding cache on behalf of the correspondent node (S1, ..., Sn, CN),
said method **characterized by** the step of
c) replacing a care-of address in the source address field of a packet sent by a mobile node (MN) and routed through the device with a home address as stored in said maintaining step.

17. A method according to claim 16, **characterized by** the steps of:
examining each packet being routed through the said routing device for IP address binding related messages;
processing the said IP address binding related messages detected in a packet, including any necessary signaling for the completion of the address binding process; and
forming a binding cache entry in a binding cache based on said address binding process.

18. A method according to claim 17, **characterized in that**
the address binding related contents are removed from the packet after said processing step.

19. A method according to claim 17, **characterized in that**
in cases in which plural correspondent nodes are present in the routing direction, the processing of address binding messages is terminated after the first address binding process specifying the same home address to care-of address mapping has been processed.

20. A method according to claim 16, **characterized by** the steps of:
examining each packet being routed through said device for a source address and optionally a Mobile IP home address option matching to an existing binding cache entry; and
routing the packet to a correspondent node (S1, ..., Sn, CN) specified by the destination address in the packet;
wherein said care-of address in said source address field of a matching packet is replaced with a home address as specified in the matching binding cache entry.

21. A method according to claim 20, **characterized by**
the step of removing said Mobile IP home address option from the packet.

22. A method according to claim 16, **characterized by**
the step of examining each IP packet being routed through said device for a destination address matching with a home address in an existing binding cache entry, when IP packets are sent to the IP network by any corresponding node.

23. A method according to claim 22, **characterized by**
intercepting a matching IP packet and tunneling the packet to the receiver's care-of address as found from the matching binding cache entry.

24. A method according to claim 22, **characterized by**
adding a routing header to a matching IP packet to route the packet to the receiver's care-of address as found from the matching binding cache entry.

25. An Internet Protocol routing system, comprising a Mobile Internet Protocol routing device according to any one of claims 1 to 15.

## Patentansprüche

1. Gerät zum Internet-Protokoll-Routing, wobei
a) Verwaltungsmittel eingerichtet sind, eines mobilitätsbezogenen Bindungszwischenspeicher außerhalb eines individuellen korrespondierenden Knotens (S1, ..., Sn, CN) zu verwalten; und
b) Führungsmittel eingerichtet sind, den Bindungszwischenspeicher im Namen des korrespondierenden Knotens (S1, ...,Sn, CN) zu führen,
wobei das Gerät **gekennzeichnet ist durch**
c) Austauschmittel, die eingerichtet sind, eine Care-of-Adresse im Quellenadressfeld eines Pakets, das **durch** einen mobilen Knoten (MN) gesendet und **durch** das Gerät geroutet wurde, mit einer Heimatadresse, wie von den Verwaltungsmittel gespeichert, auszutauschen.

2. Gerät gemäß Anspruch 1, **gekennzeichnet durch**
Untersuchungsmittel, die eingerichtet sind, jedes Paket, das **durch** das Gerät geroutet wird, nach Nachrichten mit IP-Adressbindungsbezug zu untersuchen;
Verarbeitungsmittel, die eingerichtet sind, die in einem Paket festgestellten Nachrichten mit IP-Adressbindungsbezug einschließlich jeglicher notwendiger Signalisierung für den Abschluss der Adressbindungsverarbeitung, zu verarbeiten; und
Bildungsmittel für einen Eintrag in den Bindungszwischenspeicher, die eingerichtet sind, einen Bindungszwischenspeichereintrag in einem Zwischenspeicher für Bindungen basierend auf der Adressbindungsverarbeitung zu bilden.

3. Gerät gemäß Anspruch 2, **dadurch gekennzeichnet, dass** die Führungsmittel eingerichtet sind, für die zugehörigen Sicherheitsfunktionen zu sorgen.

4. Gerät gemäß Anspruch 2, **gekennzeichnet durch**
Modifizierungsmittel, die eingerichtet sind, die Nachrichten mit IP-Adressbindungsbezug nach der Verarbeitung **durch** die Verarbeitungsmittel aus dem Paket zu entfernen.

5. Gerät gemäß Anspruch 2, **dadurch gekennzeichnet, dass**
im Fall, dass mehrere korrespondierende Knoten (S1, ..., Sn) in der Routing-Richtung vorhanden sind, die Verarbeitungsmittel eingerichtet sind, die Verarbeitung der Nachrichten mit IP-Adressbindungsbezug abzubrechen, nach dem die erste Adressbindungsverarbeitung, die dieselbe Heimatadressen-zu-Care-of-Adressen-Abbildung festlegt, verarbeitet worden ist.

6. Gerät gemäß Anspruch 2, **dadurch gekennzeichnet, dass**
die Untersuchungsmittel vorgesehen sind, jedes Paket, das durch das Gerät geroutet wird, nach einer Quellenadresse und optional einer Mobil-IP-Heimatadressen-Option, die zu einem vorhandenen Bindungszwischenspeichereintrag passt, zu untersuchen; und
Routingmittel vorgesehen sind, um das Paket zu einem korrespondierenden Knoten (S1, ...,Sn, CN), der durch die Zieladresse in dem Paket festgelegt ist, zu routen;
wobei die Austauschmittel vorgesehen sind, die Care-of-Adresse in dem Quellenadressfeld von einem passenden Paket mit einer Heimatadresse, wie in dem passenden Bindungszwischenspeichereintrag festgelegt, auszutauschen.

7. Gerät gemäß Anspruch 6, **gekennzeichnet durch**
Entfernungsmittel, die eingerichtet sind, die Mobil-IP-Heimatadressen-Option aus dem Paket zu entfernen.

8. Gerät gemäß Anspruch 2, **dadurch gekennzeichnet, dass**
die Untersuchungsmittel vorgesehen sind, die Zieladresse von jedem IP-Paket, das durch das Gerät geroutet wird, nach einer Passung mit einer Heimatadresse in einem vorhandenen Bindungszwischenspeichereintrag zu untersuchen.

9. Gerät gemäß Anspruch 8, **gekennzeichnet durch**
Abfangmittel, die eingerichtet sind, das passende IP-Paket abzufangen und das Paket zu der Care-of-Adresse des Empfängers, wie anhand des passenden Bindungszwischenspeichereintrag festgestellt, zu tunneln.

10. Gerät gemäß Anspruch 8, **gekennzeichnet durch**
Hinzufügungsmittel, die eingerichtet sind, einen Routing-Header zu dem passenden IP-Paket hinzuzufügen, um das Paket an die Care-of-Adresse des Empfängers, wie anhand des passenden Bindungszwischenspeichereintrag festgestellt, zu routen.

11. Gerät gemäß einem der vorhergehenden Ansprüche, **dadurch gekennzeichnet, dass**
das Gerät in einem oder einer Vielzahl von Routern, durch die der Verkehr zu und von dem korrespondierenden Knoten (S1, ..., Sn, CN) geroutet wird, angeordnet ist.

12. Gerät gemäß Anspruch 11, **dadurch gekennzeichnet, dass**
für einen individuellen korrespondierenden Knoten (S1, ..., Sn, CN) das Gerät in einem Zugangsrouter, der den individuellen korrespondierenden Knoten (S1, ...,Sn, CN) bedient, angeordnet ist.

13. Gerät gemäß einem der vorhergehenden Ansprüche, **dadurch gekennzeichnet, dass** das Gerät eingerichtet ist, als eine Anwendung, die angepasst ist, in ein Netzwerk aus korrespondierenden Knoten angeschlossen zu werden und für alle Mobil-IP korrespondierenden Knoten betreffenden Funktionalitäten für alle korrespondierenden Hosts in dem Netzwerk zu sorgen.

14. Gerät gemäß Anspruch 13, **dadurch gekennzeichnet, dass** das Gerät als eine Erweiterung für Sicherheitsanwendungen und/oder Auslastungsausgleichsanwendungen vorgesehen ist.

15. Gerät gemäß einem der vorhergehenden Ansprüche, **dadurch gekennzeichnet, dass** für einen individuellen korrespondierenden Knoten (S1, ..., Sn, CN) das Gerät in einem Router auf höhere Schicht, der den korrespondierenden Knoten (S1, ...,Sn, CN) bedient, angeordnet ist.

16. Verfahren zum Internet-Protokoll-Routing, das ein Internet-Protokoll-Routinggerät verwendet, wobei das Verfahren die Schritte umfasst:
a) Verwalten eines mobilitätsbezogenen Bindungszwischenspeichers außerhalb eines individuellen korrespondierenden Knotens (S1, ..., Sn, CN); und
b) Führen des Bindungszwischenspeichers im Namen des korrespondierenden Knotens (S1, ..., Sn, CN),
wobei das Verfahren **gekennzeichnet ist durch** den Schritt
c) Austauschen einer Care-of-Adresse in dem Quellenadressfeld eines Pakets, das von einem mobilen Knoten (MN) gesendet und **durch** das Gerät mit einer Heimatadresse, wie in dem Verwaltungsschritt speichert, geroutet wurde.

17. Verfahren gemäß Anspruch 16, **gekennzeichnet durch** die Schritte:
Untersuchen jedes Pakets, das **durch** das Routing-Gerät geroutet wird, nach Nachrichten mit IP-Adressbindungsbezug;
Verarbeiten der Nachrichten mit IP-Adressbindungsbezug, die in einem Paket erkannt wurden, einschließlich jeglicher notwendiger Signalisierung für den Abschluss der Adressbindungsverarbeitung; und
Bilden eines Bindungszwischenspeichereintrags in einem Bindungszwischenspeicher basierend auf der Adressbindungsverarbeitung.

18. Verfahren gemäß Anspruch 17, **dadurch gekennzeichnet, dass** der Inhalt, der Adressbindungen betrifft, aus dem Paket nach dem Verarbeitungsschritt entfernt wird.

19. Verfahren gemäß Anspruch 17, **dadurch gekennzeichnet, dass** im Fall, in dem mehrere korrespondierenden Knoten in der Routing-Richtung vorhanden sind, die Verarbeitung von Adressbindungsnachrichten abgebrochen wird, nach dem die erste Adressbindungsverarbeitung, die dieselbe Heimatadressen-zu-Care-of-Adressen-Abbildung festlegt, verarbeitet worden ist.

20. Verfahren gemäß Anspruch 16, **gekennzeichnet durch** die Schritte:
Untersuchen jedes Pakets, das **durch** das Gerät geroutet wird, nach einer Quellenadresse und optional einer Mobil-IP-Heimatadressen-Option, die zu einem vorhandenen Bindungszwischenspeichereintrag passt; und
Routen des Pakets zu einem korrespondierenden Knoten (S1, ..., Sn, CN), der **durch** die Zieladresse in dem Paket festgelegt ist;
wobei die Care-of-Adresse in dem Quellenadressfeld von einem passenden Paket mit einer Heimatadresse, wie sie in dem passenden Bindungszwischenspeichereintrag festgelegt ist, ausgetauscht wird.

21. Verfahren gemäß Anspruch 20, **gekennzeichnet durch**
den Schritt des Entfernens der Mobil-IP-Heimatadress-Option aus dem Paket.

22. Verfahren gemäß Anspruch 16, **gekennzeichnet durch**
den Schritt des Untersuchens jedes Pakets, das **durch** das Gerät geroutet wird, nach einer Zieladresse, die zu einer Heimatadresse in einem vorhandenen Bindungszwischenspeichereintrag passt, wenn IP-Pakete an das IP-Netzwerk **durch** einen beliebigen entsprechenden Knoten gesendet werden.

23. Verfahren gemäß Anspruch 22, **gekennzeichnet durch**
Abfangen eines passenden IP-Pakets und Tunnel des Pakets an die Care-of-Adresse des Empfängers, wie anhand des passenden Bindungszwischenspeichereintrag festgestellt.

24. Verfahren gemäß Anspruch 22, **gekennzeichnet durch**
Hinzufügen eines Routing-Headers zu einem passenden IP-Paket, um das Paket an die Care-of-Adresse des Empfängers, wie anhand des passenden Bindungszwischenspeichereintrag festgestellt, zu routen

25. Ein Internet-Protokoll-Routingsystem, umfassend ein Mobil-Internet-Protokoll-Routinggerät gemäß einem der Ansprüche 1 bis 15.

## Revendications

1. Dispositif pour le routage de protocole Internet, dans lequel
a) des moyens de maintien sont prévus pour maintenir un cache de liaison relatif à la mobilité à l'extérieur d'un noeud correspondant individuel (S1, ..., Sn, CN) ; et
b) des moyens de gestion sont prévus pour gérer ledit cache de liaison pour le compte du noeud correspondant (S1, ..., Sn, CN),
ledit dispositif **caractérisé par**
c) des moyens de remplacement prévus pour remplacer une adresse de garde dans le champ d'adresse source d'un paquet envoyé par un noeud mobile (MN) et acheminé à travers le dispositif avec une adresse initiale, telle qu'enregistrée par lesdits moyens de maintien.

2. Dispositif selon la revendication 1, **caractérisé par**
des moyens d'examen prévus pour examiner chaque paquet, étant acheminés à travers le dispositif, pour les messages relatifs à la liaison d'adresse IP ;
des moyens de traitement prévus pour traiter lesdits messages relatifs à la liaison d'adresse IP détectés dans un paquet, comprenant toute signalisation nécessaire pour l'achèvement du processus de liaison d'adresse ; et
des moyens de formation d'entrée de cache de liaison prévus pour former une entrée de cache de liaison dans un cache de liaison basé sur ledit processus de liaison d'adresse.

3. Dispositif selon la revendication 2, **caractérisé en ce que**
lesdits moyens de gestion sont prévus pour préserver les fonctions de sécurité associées.

4. Dispositif selon la revendication 2, **caractérisé par**
des moyens de modification prévus pour retirer ledit message relatif à la liaison d'adresse IP du paquet après le traitement par lesdits moyens de traitement.

5. Dispositif selon la revendication 2, **caractérisé en ce que**
dans les cas dans lesquels plusieurs noeuds correspondants (S1, ..., Sn) sont présents dans la direction de routage, lesdits moyens de traitement sont prévus pour terminer le traitement des messages de liaison relatifs à l'adresse IP, une fois que le premier processus de liaison d'adresse spécifiant la même adresse initiale à l'application d'adresse de garde a été traité.

6. Dispositif selon la revendication 2, **caractérisé en ce que**
lesdits moyens d'examen sont fournis pour examiner chaque paquet étant acheminé à travers ledit dispositif pour l'adresse source et en option une option d'adresse initiale IP mobile correspondant à une entrée de cache de liaison existante ; et
des moyens de routage sont prévus pour acheminer le paquet vers un noeud correspondant (S1, ..., Sn, CN) spécifié par l'adresse de destination dans le paquet ;
dans lequel lesdits moyens de remplacement sont fournis pour remplacer ladite adresse de garde dans ledit champ d'adresse source d'un paquet correspondant par une adresse initiale, telle que spécifiée dans ladite entrée de cache de liaison correspondante.

7. Dispositif selon la revendication 6, **caractérisé par**
des moyens de retrait prévus pour retirer du paquet ladite option d'adresse initiale IP mobile.

8. Dispositif selon la revendication 2, **caractérisé en ce que**
lesdits moyens d'examen sont prévus pour examiner l'adresse destination de chaque paquet IP étant acheminé à travers ledit dispositif pour l'adaptation avec une adresse initiale dans une entrée de cache de liaison existante.

9. Dispositif selon la revendication 8, **caractérisé par**
des moyens d'interception prévus pour intercepter ledit paquet IP correspondant et pour tunnelliser le paquet vers l'adresse de garde du récepteur, telle que trouvée dans ladite entrée de cache de liaison correspondante.

10. Dispositif selon la revendication 8, **caractérisé par**
des moyens d'ajout prévus pour ajouter un en-tête de routeur audit paquet IP correspondant pour acheminer le paquet vers l'adresse de garde du récepteur, telle que trouvée dans l'entrée de cache de liaison correspondante.

11. Dispositif selon l'une quelconque des revendications précédentes, **caractérisé en ce que**
ledit dispositif est situé dans une ou une pluralité de routeurs à travers lesquels est acheminé le trafic vers et depuis le noeud correspondant (S1, ..., Sn, CN).

12. Dispositif selon la revendication 11, **caractérisé en ce que**
pour un noeud correspondant individuel (S1, ..., Sn, CN), ledit dispositif est situé dans un routeur d'accès desservant le noeud correspondant individuel (S1, ..., Sn, CN).

13. Dispositif selon l'une quelconque des revendications précédentes, **caractérisé en ce que**
ledit dispositif est prévu comme un serveur monofonctionnel adapté pour être branché dans un réseau de noeuds correspondants et pour préserver toutes les fonctionnalités relatives au noeud correspondant IP mobile pour tous les hôtes correspondants dans ledit réseau.

14. Dispositif selon la revendication 13, **caractérisé en ce que**
ledit dispositif est fourni comme une extension aux serveurs de sécurité et/ou aux serveurs d'équilibrage de charge.

15. Dispositif selon l'une quelconque des revendications précédentes, **caractérisé en ce que**
pour un noeud correspondant individuel (S1, ..., Sn, CN), ledit dispositif est situé dans un routeur de niveau supérieur desservant le noeud correspondant (S1, ..., Sn, CN).

16. Procédé pour le routage de protocole Internet utilisant un dispositif de routage de protocole Internet, dans lequel ledit procédé comprend les étapes suivantes :
a) maintien d'un cache de liaison relatif à la mobilité à l'extérieur d'un noeud correspondant individuel (S1, ..., Sn, CN) ; et
b) gestion dudit cache de liaison pour le compte du noeud correspondant (S1, ..., Sn, CN),
ledit procédé **caractérisé par** l'étape consistant à
c) remplacer une adresse de garde dans le champ d'adresse source d'un paquet envoyé par un noeud mobile (MN) et acheminé à travers le dispositif par une adresse initiale, telle qu'enregistrée dans ladite étape de maintien.

17. Procédé selon la revendication 16, **caractérisé par** les étapes consistant à
examiner chaque paquet étant acheminé à travers ledit dispositif de routage pour les messages relatifs à la liaison d'adresse IP ;
traiter lesdits messages relatifs à la liaison d'adresse IP détectés dans un paquet, y compris toute signalisation nécessaire pour l'achèvement du processus de liaison d'adresse ; et
former une entrée de cache de liaison dans un cache de liaison basé sur ledit processus de liaison d'adresse.

18. Procédé selon la revendication 17, **caractérisé en ce que**
les contenus relatifs à la liaison d'adresse sont retirés du paquet après ladite étape de traitement.

19. Procédé selon la revendication 17, **caractérisé en ce que**
dans les cas dans lesquels plusieurs noeuds correspondants sont présents dans la direction de routage, le traitement des messages de liaison d'adresse est terminé une fois que le premier processus de liaison d'adresse spécifiant la même adresse initiale à l'application d'adresse de garde est traité.

20. Procédé selon la revendication 16, **caractérisé par** les étapes suivantes :
examen de chaque paquet étant acheminé à travers ledit dispositif pour une adresse source et en option une option d'adresse initiale IP mobile correspondant à une entrée de cache de liaison existante ; et
routage du paquet vers un noeud correspondant (S1, ..., Sn, CN) spécifié par l'adresse de destination dans le paquet ;
dans lequel ladite adresse de garde dans ledit champ d'adresse source d'un paquet correspondant est remplacée par une adresse initiale, telle que spécifiée dans l'entrée de cache de liaison correspondante.

21. Procédé selon la revendication 20, **caractérisé par**
l'étape consistant à retirer du paquet ladite option d'adresse initiale IP mobile.

22. Procédé selon la revendication 16, **caractérisé par**
l'étape consistant à examiner chaque paquet IP étant acheminé à travers ledit dispositif pour une adresse destination correspondant à une adresse source dans une entrée de cache de liaison existante, lorsque les paquets IP sont envoyés vers le réseau IP par tout noeud correspondant.

23. Procédé selon la revendication 22, **caractérisé par**
l'interception d'un paquet IP correspondant et la tunnellisation du paquet vers l'adresse de garde du récepteur, telle que trouvée dans l'entrée de cache de liaison correspondante.

24. Procédé selon la revendication 22, **caractérisé par**
l'ajout d'un en-tête de routage à un paquet IP correspondant pour acheminer le paquet vers l'adresse de garde du récepteur, telle que trouvée dans l'entrée de cache de liaison correspondante.

25. Système de routage de protocole Internet, comprenant un dispositif de routage de protocole Internet mobile selon l'une quelconque des revendications 1 à 15.
